# EUROPEAN PATENT SPECIFICATION

(11) **EP 4 442 773 B1**
(45) Date of publication and mention of the grant of the patent: **10.09.2025**
(21) Application number: 24168043.8
(22) Date of filing: 02.04.2024
(51) Int. Cl.: C09D 11/17, C09D 11/16

(54) **AQUEOUS GLITTERING INK FOR MINIATURE PAINTING AND APPLICATORS**
WÄSSRIGE GLITZERNDE TINTE FÜR MINIATUR-GEMÄLDE UND APPLIKATOREN
ENCRE AQUEUSE SCINTILLANTE POUR PEINTURE DE MINIATURES ET APPLICATEURS

(30) Priority: 06.04.2023 JP 2023062339
(43) Date of publication of application: 09.10.2024
(73) Proprietor: MITSUBISHI PENCIL COMPANY, LIMITED, Tokyo 140-8537 (JP)
(72) Inventor: MIZOGUCHI, Tatsuya, Shinagawa-ku, Tokyo, 140-8537 (JP)
(74) Representative: Vossius & Partner Patentanwälte Rechtsanwälte mbB

(56) References cited:
- EP-A1- 1 411 094
- JP-A- 2005 263 982

## Description

### BACKGROUND OF THE INVENTION

### Field of Invention

The present invention relates to an aqueous glittering ink suitable for weathering paints for miniatures.

### Description of the Related Art

Miniature lovers paint miniatures in water-based acrylic paints after they built them. They airbrush the whole body, then brush it down and dry-brush it so as to draw out the richness of colors and to express stereoscopic effects and gradation effects by overpainting in a few layers of the water-based acrylic paints on the dry surface, which thereby creates distressed painting, namely so-called weathering. Weathering is a technique to show miniatures as if they had long been used so that they were damaged and stained. A water-based acrylic paint as used in such paintings requires quick dryability and water resistance after dried.

A water-based paint liquid for miniatures having excellent applicability and solidified fixation to the non-absorbing surface contains at least water and coloring materials. For example, JP 4979182 B discloses a water-based paint liquid for miniatures comprising 1 to 7 wt% of alkali-soluble resins such as styrene-acrylic acid resin, styrene-maleic acid resin and poly(acrylic acid), based on the total amount of the paint liquid; 10 to 35 wt% of at least one water-soluble organic solvent selected from ethylene glycol, propylene glycol, ethylene glycol monomethyl ether, ethylene glycol monoethyl ether, propylene glycol monoethyl ether and propylene glycol monoethyl ether, based on the total amount of the paint liquid; and pH adjustors such as aminomethylpropanol, ammonia water and ethylenediamine. Weathering paint liquids have the above-described composition and various color paints are known in regular colors.

In addition, there is a request for water-based paint liquids that can impart glitter to miniatures. But paint liquids containing metallic flake pigments such as plate-like aluminum particles have poor rub resistance, so that peeling off paint from the surface easily is a problem. JP 6559480 B discloses an aqueous ink composition that solved such a problem. The aqueous ink composition for writing utensil comprises glitter pigment particles, polyolefin resin particles, an elastic polymer, a water-soluble acrylic polymer and a solvent. The viscosity index n is 0.7 to 1.0 at 20 °C and the elastic polymer is a styrenebutadiene elastomer or an acrylic elastomer with a glass transition temperature (Tg) of 1 to 70 °C. JP 6826861 B discloses that an aqueous ink composition for writing board comprises a plate-like pigment, hollow particles with an average particle size of 0.1 to 1.0 µm and a specific phosphoric ester. The aqueous ink composition prevents hard caking and never loses brilliance, even though the aqueous ink composition is exposed to harsher operating conditions, such as high temperature and ultraviolet radiation, than indoor environmental conditions. Besides the above, JP 7151971 B discloses an aqueous metallic color ink comprising at least a non-leafing type aluminum pigment, a leafing type aluminum pigment, an ethylene-vinyl acetate emulsion, water and a pigment. According to JP 7151971 B, the ethylene-vinyl acetate emulsion prevents the pigments from sedimenting and contributes to improving glittering properties and concealability of a painted film made by drawing.

But aqueous ink compositions containing metallic flake pigments such as plate-like aluminum particles as coloring material are easy to sediment metal powder, which causes a problem of clogging an applicator tip.

### SUMMARY OF THE INVENTION

The above problems having been solved, the present invention aims at providing an aqueous glittering ink for miniature painting that can be spread out on a model after it is applied, and further that can fixate the film thus painted, and aims at providing an applicator loaded with the aqueous glittering ink.

The aqueous glittering ink for miniature painting of the present invention comprises at least a glitter pigment, styrene-acrylic acid resin, hollow particles of 0.1 to 2.0 µm, isobutylene-maleic anhydride resin, and 10 to 35 mass% of a water-soluble organic solvent with a boiling point of 150 to 280 °C.

Preferably, the glitter pigment is an aluminum pigment.

Preferably, the styrene-acrylic acid resin has a weight-average molecular weight of 2,000 to 100,000.

Preferably, the aqueous glittering ink for miniature painting has a viscosity of 5 to 20 mPa·s at 20 rpm, determined by an ELD type viscometer.

The applicator of the present invention is loaded with the aqueous glittering ink for miniature painting.

The aqueous glittering ink for miniature painting of the present invention has excellent concealability and there is no concern about trouble in writing due to an applicator tip clogging. The aqueous glittering ink does not dry quickly after applied to a model. Therefore, if only applying is finished within three minutes, the aqueous glittering ink can be spread out on the model with a cotton swab and so on. And after three hours, the dried ink film is fixated on the model. Accordingly, the present invention can provide an aqueous glittering ink suitable for weathering paints for miniatures.

### BRIEF DESCRIPTION OF DRAWING

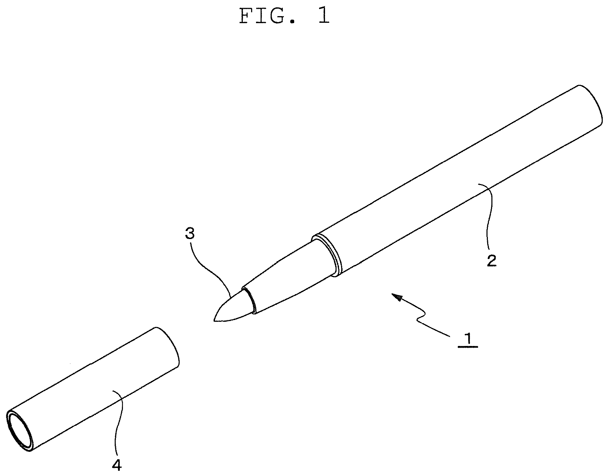

Fig. 1 shows a typical example of an applicator loaded with an aqueous glittering ink for miniature painting of the present invention.

### DESCRIPTION OF THE PREFERRED EMBODIMENTS

Hereinafter, the present invention will be described in detail.

The aqueous glittering ink for miniature painting of the present invention (hereinafter also referred to simply as the "aqueous glittering ink") at least comprises a glitter pigment, a styrene-acrylic acid resin, hollow particles of 0.1 to 2.0 µm, an isobutylene-maleic anhydride resin, and 10 to 35 mass% of a water-soluble organic solvent with a boiling point of 150 to 280 °C.

The glitter pigments include plate-like metallic powder pigments, such as an aluminum pigment, a pearl pigment and a brass pigment. The glitter pigments give brilliance to the aqueous glittering ink and enable the handwriting to reflect light.

Products, such as WXM series of which aluminum surface is anti-rust treated with a phosphorus compound, WL series of which aluminum surface is anti-rust treated with a molybdenum compound, and EMR series of which aluminum flake surface is coated with high-density silica (these are all manufactured by Toyo Aluminium K.K.) are on the market as the aluminum pigment.

The glitter pigment of a single kind or two or more kinds mixed can be used according to desired hue and brilliance.

Besides the foregoing glitter pigments, as the need arises, all kind of dyes dissolved or dispersed in water and various well-known coloring materials of inorganic and organic pigments can be used for the aqueous glittering ink of the present invention.

The content of glitter pigment is 1 to 20 wt%, and 2 to 12 wt% preferably, in the total amount of glittering aqueous ink.

The dyes include acid dyes such as Eosin, Phloxine, Water Yellow #6-C, Acid Red, Water Blue #105, Brilliant Blue FCF and Nigrosine NB; direct dyes such as Direct Black 154, Direct Sky Blue 5B, Violet BB; and basic dyes such as Rhodamine and Methyl Violet.

The inorganic pigments include carbon black and graphite. The organic pigments include azo lake, an insoluble azo pigment, a chelate azo pigment, a phthalocyanine pigment, an anthraquinone pigment, a quinacridone pigment, a nitro pigment and a nitroso pigment.

The dyes and the inorganic and organic pigments are not restricted to the above-described examples.

The content of the coloring material is less than 20 mass% at most in the total amount of the aqueous glittering ink.

Hollow particles, together with the glitter pigment and isobutylene-maleic anhydride resin, forms a loose agglomerate in the ink. As a result, the groundwork of a plastic model is covered when the ink is applied to the model, which contributes to improving concealability.

Hollow particles are inorganic or organic particles having a hollow therein. The hollow particles may be single hollow particles in which each hollow particle possesses one hollow therein or multihollow particles in which each hollow particle possesses a few hollows therein.

The hollow particles include inorganic hollow particles such as glass and silica particles, and organic hollow particles, such as styrene resin (e.g., cross-linked styrene-acrylic acid resin), acrylic resin (e.g., acrylonitrile-acrylic acid resin), (meth)acrylic acid resin, phenolic resin, fluororesin, polyamide resin, polyimide resin, polycarbonate resin and polyether resin, all of which are composed of higher-molecular-weight compounds. The shape may be any of spherical, elliptical, and acicular shapes. Among these, it is preferable that the material should be hollow resin particles and that the shape should be spherical. The solid particles, i.e., nonhollow particles cannot show the efficacy of the present invention.

Smaller particle size is advantageous to the hollow particles, because the glitter pigment can maintain the brilliance, conceal the groundwork of a miniature, and inhibit the formation of hard cake. The average particle size is 0.1 to 2.0 µm, and 0.2 to 1.5 µm preferably. Having an average particle size of the hollow particles exceeding 2.0 µm may cause the deterioration of the brilliance of the glitter pigment. In the present specification, the average particle size of the hollow particles means an average value (D50) indicated in the histogram of particle size distribution obtained from light-scattering measurement with a particle size analyzer (FPAR-1000; Otsuka Electronics Co., Ltd.).

Crosslinked and non-crosslinked styrene-acrylic acid resins are used for the hollow particles. Examples of commercial products are ROPAQUE OP-62 (average particle size: 450 nm, percentage of hollowness: 33%), ROPAQUE OP-84J (average particle size: 550 nm, percentage of hollowness: 20%, solid content: 42.5%), ROPAQUE OP-91, ROPAQUE HP-1055 (average particle size: 1000 nm, percentage of hollowness: 55%), ROPAQUE HP-91 (average particle size: 1000 nm, percentage of hollowness: 50%), ROPAQUE ULTRA (average particle size: 380 nm, percentage of hollowness: 45%), ROPAQUE ULTRA E (average particle size: 380 nm, percentage of hollowness: 45%), ROPAQUE ULTRA DUAL (average particle size: 380 nm, percentage of hollowness: 45%) (up to here, ROHM AND HAAS ELECTRONIC MATERIALS K.K.), SX-863 (A), SX-864 (B), SX-866 (A), SX-866 (B) (average particle size: 300 nm, percentage of hollowness: 30%), SX-868 (average particle size: 500 nm) (up to here, JSR Corporation), Nipol MH5055 (average particle size: 500 nm), and Nipol MH8101 (average particle size: 1 µm) (up to here, Zeon Corporation).

The concentration of the solid hollow particles is 0.1 to 10 mass% preferably, and 0.5 to 8 mass% further preferably in the total concentration of the aqueous glittering ink. When the content of the hollow particles exceeds 10 mass%, the brightness in drawing lines may deteriorate.

Containing the hollow particles in the foregoing range can effectively prevent sediment of the glitter pigment from settling into hard caking. Such an aqueous glittering ink is excellent in concealability, and does not clog up an applicator tip, with the result that it successfully avoids failure to write.

Styrene-acrylic acid resins are alkali-soluble resins having side-chain carboxy groups. The alkali-soluble resins work for improving solidified fixation of drawing lines dried after it is applied, and also work for dispersing pigments. The alkali-soluble resins adsorb the glitter pigment particles and inhibit their agglomeration, so that they prevent them from hard caking and their redispersibility from being lowered, which thereby keeps an applicator tip away from being clogged. In particular, when the above hollow particles and the styrene-acrylic acid resins are used together, the efficacy works strongly, which is preferable. A styrene-acrylic acid resin preferably having a weight-average molecular weight of 2,000 to 100,000 is further preferable in terms of preventing applicator tip clogging. Examples of styrene-acrylic acid resins specifically available are JONCRYL 52J, JONCRYL 61J, JONCRYL 62, JONCRYL 63J, JONCRYL 60J and JONCRYL 70J (these are all manufactured by BASF Japan Ltd.). They can be used singly or by selecting two or more kinds. Preferably, the content of the styrene-acrylic acid resin is 1 to 7 mass%, and further preferably 1.5 to 3.5 mass% based on the total content of the aqueous glittering ink. Lowering the content of the styrene-acrylic acid resin to less than 1 mass% may cause fixability of drawing lines to be weakened. Raising the content of the styrene-acrylic acid resin to more than 7 mass% causes the viscosity of the aqueous glittering ink to increase, which makes the application of the aqueous glittering ink difficult.

The isobutylene-maleic anhydride resin plays a role not only as a viscosity modifier, but also in facilitating dispersibility of the glitter pigments in the ink, in forming an even film and in improving abrasion, water and fixation resistances. Isobutylene-maleic anhydride resin has a weight-average molecular weight (Mw) of 3,000 to 400,000 preferably and far preferably 5,000 to 200,000, much preferably 30,000 to 100,000, and most preferably 50,000 to 70,000. In the present specification, the weight-average molecular weight (Mw) is measured by the aqueous gel permeation chromatography (GPC) on polystyrene basis.

The isobutylene-maleic anhydride resin may be modified products, such as isobutylene-maleic anhydride copolymer neutralized with ammonium, neutralized with sodium hydroxide, or neutralized with amines.

Commercially available products such as ISOBAM (KURARAY CO., LTD.) are known as an isobutylene-maleic anhydride resin.

Preferably the content of the isobutylene-maleic anhydride resin is 0.5 to 6 mass%, and far preferably 1 to 4 mass% and 1.5 to 3 mass% much preferably, based on the total amount of the aqueous glittering ink. Lowering the content of isobutylene-maleic anhydride resin to less than 0.5 mass% may cause the sedimentation of a pigment when a pen tip is directed downward, and may clog the pen tip, which is undesirable.

Water-soluble organic solvents used in the present invention need to have a boiling point of 150 to 280 °C, in terms of applicability, and spreading and drying abilities after the aqueous glittering ink is applied.

Examples of the water-soluble organic solvents are ethylene glycol, propylene glycol, ethylene glycol monomethyl ether, ethylene glycol monoethyl ether, propylene glycol monomethyl ether, 1,3-butylene glycol, propylene glycol monoethyl ether and hexylene glycol. They can be used singly or in a form of mixture of two kinds or more. The water-soluble organic solvent having a boiling point of 150 to 280 °C can be used in combination with a small amount of a water-soluble organic solvent having a boiling point of higher than 280 °C. Specific examples of such solvents include glycerin (boiling point: 290 °C) and diglycerin (boiling point: 319 °C).

In the total amount of the aqueous glittering ink, the content of the water-soluble organic solvent is 10 to 35 mass%, and 20 to 30 mass% is preferable. When the content of the water-soluble organic solvent is less than 10 mass%, drawing lines get dry too fast for the aqueous glittering ink to be spread out. When the content of the water-soluble organic solvent is more than 35 mass%, drawing lines dry too slow.

As the remainder, water (e.g., tap water, purified water, distilled water, deionized water, pure water) and other publicly known components, such as a pH adjuster, a surfactant and an antiseptic can be used as needed, so long as the effect of the present invention is not impaired.

The aqueous glittering ink of the present invention can be prepared by mixing at least a styrene-acrylic acid resin, a glitter pigment, hollow particles of 0.1 to 2.0 µm, an isobutylene-maleic anhydride resin, a water-soluble organic solvent having a boiling point of 150 to 280 °C, water and the other arbitrary components with an agitator, such as a homomixer, a homogenizer and a disperser, and then as needed, removing coarse particles by means of filtration and centrifugation.

The aqueous glittering ink has a viscosity of 2 to 20 mPa·s at 20 rpm (25 °C) (ELD type viscometer, Toki Sangyo Co., Ltd.). A viscosity of 5 to 20 mPa·s is especially desirable, because it is helpful for drawing lines to be delicately spread out after the aqueous glittering ink is applied.

The applicator 1 of the present invention is loaded with the foregoing aqueous glittering ink. Concretely speaking, the applicator 1 is a weathering paint applicator for miniatures. Generally, applicators for paint are cotton pad type or direct liquid type felt pens. Among them, the cotton pad type felt pen is preferable, because it is easy to treat. Fig. 1 represents a typical example of an applicator 1 whose pen tip 3 is composed of a shaft tube 2 with felt padding and a cap 4.

### [Examples]

Hereinafter, the present invention will be described in detail with reference to examples, but the present invention is not restricted to the following examples.

### [Preparation of aqueous glittering inks]

Aqueous glittering inks of Examples 1 to 6 and aqueous inks of Comparative Examples 1 to 3 were prepared as described below.

### [Example 1]

An aqueous glittering ink was prepared by mixing 10 mass % of an aluminum pigment (WXM-7675, manufactured by Toyo Aluminium K.K.), 2 mass% of hollow resin particles (ROPAQUE 1055, manufactured by ROHM AND HAAS ELECTRONIC MATERIALS K.K.), 1 mass% of isobutylene-maleic anhydride copolymer (ISOBAM 104, manufactured by KURARAY CO., LTD.), 2 mass% of C.I. Pigment Red 122 (Paliogen Pink L 4790, manufactured by BASF), 3 mass% of styrene-acrylic acid copolymer (JONCRYL 63J, manufactured by BASF Japan Ltd.), 15 mass% of propylene glycol, 0.3 mass% of an antiseptic, 0.5 mass% of a surface tension modifier, 0.1 mass% of a defoamer and 66.1 mass% of distilled water (described as the remainder in Table 1).

### [Examples 2 to 11] [Comparative Examples 1 to 7]

Aqueous glittering inks were prepared by mixing different types and ratios of glitter pigments, hollow particles, isobutylene-maleic anhydride resins, styrene-acrylic acid resins, water-soluble organic solvents and the other additives as shown in Table. In Table 1, "the remainder" represents a value obtained by subtracting the total amount of the components (mass%) from 100 mass% of the aqueous glittering ink.

### [Assessment of aqueous glittering inks]

The aqueous glittering inks of Examples 1 to 11 and the aqueous inks of Comparative Examples 1 to 7 were poured into ink storage sections of cotton pad type marking pens (PNA125, manufactured by Mitsubishi Pencil Co., Ltd.), and applicators for the use of application, spreading and removal of the aqueous glittering inks were made. Polyester fiber bundles were used for the ink storage sections of the marking pens.

A polystyrene plate (100 mm x 100 mm x 0.5 mm) commonly used for miniatures was painted with each of the marking pens obtained, and the condition of drawing lines (initial spreadability, and drying and fixation) was assessed in the circumstances of a room temperature of 25 °C and a humidity of 65% as shown below.

### (1) Initial Spreadability

A drawing line was rubbed with a cotton swab after the aqueous glittering ink was applied, and then the spreadability of the drawing line was checked according to the following assessment criteria.
A: The drawing line is not solidified but spreadable.
B: The paint is partially solidified and a drawing line is hardly spreadable.
C: Not spreadable.

### (2) Drying and Fixation

The drawing line was touched with a finger three hours after the aqueous glittering ink was applied, and checked if the finger was smeared with it according to the following assessment criteria.
A: The drawing line completely dries up, so that the finger is not smeared with it.
B: The finger is slightly smeared with the drawing line.
C: The finger is smeared with the drawing line.

### (3) Concealabilty

A drawing lined with a marking pen was observed with eyes according to the following assessment criteria.
A: The drawing line completely has concealed the groundwork.
B: The drawing line is insufficiently concealable.
C: The drawing line is not concealed.

### (4) Resistance to Applicator Tip Clogging

The marking pen was placed in a thermostatic bath with its tip turned downward and kept at 50 °C for one month, and then the applicability was assessed.
A: No blurring is observed but an even film is formed.
B: The film has some sort of blur and its tone is light.
C: The film is badly blurred. The aqueous glittering ink is hardly applicable.

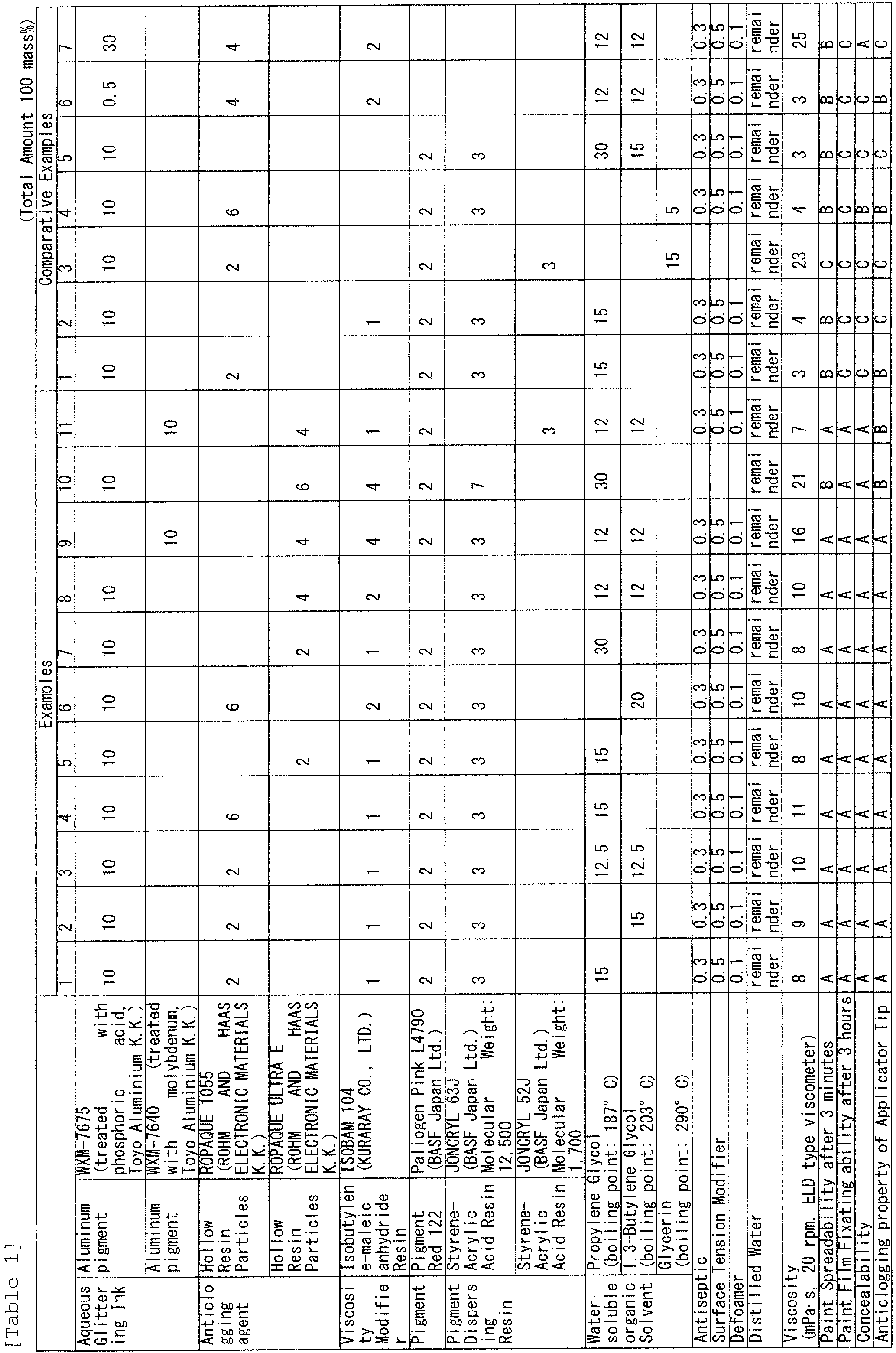

Unlike Examples 1 to 10, in Example 11 where styrene-acrylic acid copolymer with a molecular weight of 1,700 was used, the paint film was slightly blurred, though its spreadability, drying and fixation, and concealability were almost the same as those of Examples 1 to 10. The results confirmed that styrene-acrylic acid copolymer needs to have a relatively larger molecular weight in order to achieve good pigment dispersion.

The aqueous ink of Comparative Example 1 without isobutylene-maleic anhydride resin and any water-soluble organic solvent had a high degree of aluminum agglomeration, so that the film was badly blurred. The surface of the film started to be solidified, and three minutes after it was applied, the film became difficult to spread over.

Comparative Example 3 which contains not isobutylene-maleic anhydride resin but glycerin as a higher boiling point water-soluble organic solvent shows slightly better than Comparative Example 1 in terms of after three-minute spreadability and resistance to pen tip clogging. But in Comparative Example 3, due to use of glycerin having a higher boiling point than propylene glycol and 1,3-butylene glycol used in Examples 1 to 11, the paint surface did not dry easily even after a lapse of three hours but the finger was smeared with the aqueous ink.

The aqueous inks of Comparative Examples 2 and 5 without any hollow particles were poor in resistance to pen tip clogging, because the aluminum pigment was easy to sediment.

The aqueous ink of Comparative Example 6 with an extremely small amount of the glitter pigment was poor not only in concealability but also in sufficient glitter, while the aqueous ink of Comparative Example 7 with an extremely large amount of the glitter pigment was rich in concealability, but it was so viscous that the pen tip was clogged, because the water content was smaller than those of aqueous glittering inks of Examples 1 to 11.

## Claims

1. An aqueous glittering ink for miniature painting comprising at least a glitter pigment, styrene-acrylic acid resin, hollow particles of 0.1 to 2.0 µm, isobutylene-maleic anhydride resin, and 10 to 35 mass% of a water-soluble organic solvent with a boiling point of 150 to 280 °C.

2. The aqueous glittering ink for miniature painting according to claim 1, wherein the glitter pigment is an aluminum pigment.

3. The aqueous glittering ink for miniature painting according to claim 2, wherein the styrene-acrylic acid resin has a weight-average molecular weight of 2,000 to 100,000.

4. The aqueous glittering ink for miniature painting according to claim 3, having a viscosity of 5 to 20 mPa·s at 20 rpm, determined by an ELD type viscometer.

5. An applicator loaded with the aqueous glittering ink for miniature painting according to any one of claims 1 to 4.

## Patentansprüche

1. Eine wässrige glitzernde Tinte für Miniaturgemälde, umfassend mindestens ein Glitzerpigment, Styrol-Acrylsäureharz, Hohlteilchen mit 0,1 bis 2,0 µm, Isobutylen-Maleinsäureanhydridharz und 10 bis 35 Massen-% eines wasserlöslichen organischen Lösungsmittels mit einem Siedepunkt von 150 bis 280°C.

2. Die wässrige glitzernde Tinte für Miniaturgemälde nach Anspruch 1, wobei das Glitzerpigment ein Aluminiumpigment ist.

3. Die wässrige glitzernde Tinte für Miniaturgemälde nach Anspruch 2, wobei das Styrol-Acrylsäureharz ein Gewichtsmittel des Molekulargewichts von 2.000 bis 100.000 aufweist.

4. Die wässrige glitzernde Tinte für Miniaturgemälde nach Anspruch 3, welche eine Viskosität von 5 bis 20 mPa·s bei 20 UpM, bestimmt durch ein Viskosimeter vom ELD-Typ, aufweist.

5. Ein Applikator, der mit der wässrigen glitzernden Tinte für Miniaturgemälde nach einem der Ansprüche 1 bis 4 befüllt ist.

## Revendications

1. Encre aqueuse scintillante pour peinture de miniatures, comprenant au moins un pigment scintillant, une résine de styrène-acide acrylique, des particules creuses de 0,1 à 2,0 µm, une résine d'isobutylène-anhydride maléique, et 10 à 35 % en masse d'un solvant organique soluble dans l'eau ayant un point d'ébullition de 150 à 280 °C.

2. Encre aqueuse scintillante pour peinture de miniatures selon la revendication 1, dans laquelle le pigment scintillant est un pigment d'aluminium.

3. Encre aqueuse scintillante pour peinture de miniatures selon la revendication 2, dans laquelle la résine de styrène-acide acrylique a une masse moléculaire moyenne en masse de 2 000 à 100 000.

4. Encre aqueuse scintillante pour peinture de miniatures selon la revendication 3, ayant une viscosité de 5 à 20 mPa·s à 20 tr/min, déterminée par un viscosimètre de type ELD.

5. Applicateur chargé de l'encre aqueuse scintillante pour peinture de miniatures selon l'une quelconque des revendications 1 à 4.
